# EUROPÄISCHE PATENTSCHRIFT

(11) **EP 4 222 410 B1**
(45) Veröffentlichungstag und Bekanntmachung des Hinweises auf die Patenterteilung: **27.11.2024**
(21) Anmeldenummer: 21791255.9
(22) Anmeldetag: 01.10.2021
(51) Int. Cl.: F17C 13/04

(54) **KUPPLUNGSVORRICHTUNG UND KRYO-BETANKUNGSANORDNUNG**
COUPLING DEVICE AND CRYO FILLING ASSEMBLY
DISPOSITIF D'ACCOUPLEMENT ET DISPOSITIF DE CRYO-RAVITAILLEMENT

(30) Priorität: 02.10.2020 EP 20020449
(43) Veröffentlichungstag der Anmeldung: 09.08.2023
(73) Patentinhaber: Butting CryoTech GmbH, 84508 Burgkirchen an der Alz (DE)
(72) Erfinder: EHEGARTNER, Florian, 82049 Pullach (DE); REITER, Bernhard, 83355 Grabenstätt (DE)
(74) Vertreter: Stornebel, Kai
(86) Internationale Anmeldenummer: PCT/EP2021/025376
(87) Internationale Veröffentlichungsnummer: WO 2022/069077

(56) Entgegenhaltungen:
- DE-A1- 102005 054 894
- DE-T2- 60 213 937
- US-A- 4 230 161
- US-A- 5 921 266
- US-A1- 2019 383 435

## Beschreibung

Die Erfindung betrifft eine Kupplungsvorrichtung für eine Kryo-Betankungsanordnung und eine Kryo-Betankungsanordnung mit einer derartigen Kupplungsvorrichtung. Eine Kupplungseinrichtung ist aus US4230161A bekannt.

Eine kryogene Betankungsanlage umfasst einen Speicherbehälter, der mit Hilfe eines Betankungsschlauchs oder -rohres, einer an dem Betankungsschlauch oder -rohr vorgesehenen Kupplungsvorrichtung und eines an einem Fahrzeug vorgesehenen Empfangsstutzens mit einem Speicherbehälter des Fahrzeugs koppelbar ist, so dass das Fahrzeug mit kryogenen Medien, wie beispielsweise Wasserstoff, betankt werden kann. Dabei ist es zum Verhindern einer Beschädigung der Kupplungsvorrichtung, des Empfängerstutzens oder weiterer Bauteile der kryogenen Betankungsanlage wünschenswert, dass auf die Kupplungsvorrichtung im Betankungsbetrieb nur eine möglichst geringe Zugkraft aufgebracht wird.

Vor diesem Hintergrund besteht eine Aufgabe der vorliegenden Erfindung darin, eine verbesserte Kupplungsvorrichtung zur Verfügung zu stellen.

Demgemäß wird eine Kupplungsvorrichtung für eine Kryo-Betankungsanordnung vorgeschlagen. Die Kupplungsvorrichtung umfasst ein Ventil, welches zwischen einem Eingang und einem Ausgang der Kupplungsvorrichtung angeordnet ist, eine primäre Ansteuerung zum Öffnen und Schließen des Ventils, und eine von der primären Ansteuerung getrennte sekundäre Ansteuerung, wobei die primäre Ansteuerung einen Schalter aufweist, der dem Ventil vorgeschaltet ist, und wobei die sekundäre Ansteuerung den Schalter öffnet, um das Ventil zu schließen, sobald eine auf die Kupplungsvorrichtung wirkende Zugkraft über einen vorgegebenen Wert ansteigt.

In einer Weiterbildung wird eine Kupplungsvorrichtung für eine Kryo-Betankungsanordnung vorgeschlagen. Die Kupplungsvorrichtung umfasst ein Ventil, welches zwischen einem Eingang und einem Ausgang der Kupplungsvorrichtung angeordnet ist, eine primäre Ansteuerung zum Öffnen und Schließen des Ventils, und eine von der primären Ansteuerung getrennte sekundäre Ansteuerung, welche dazu eingerichtet ist, das Ventil zu schließen, sobald eine auf die Kupplungsvorrichtung wirkende Zugkraft über einen vorgegebenen Wert ansteigt.

Dadurch, dass sich das Ventil schließt, sobald die Zugkraft über den vorgebenen Wert ansteigt, ist es zum einen möglich, die Zufuhr eines Kryogens unabhängig von der primären Ansteuerung zu stoppen und zum anderen kann sich die Kupplungsvorrichtung bei Überschreitung des vorgegebenen Werts der Zugkraft selbsttätig von einem Empfängerstutzen der Kryo-Betankungsanordnung trennen. Hierzu wird beispielsweise ein Verriegelungsmechanismus gelöst. Eine Beschädigung der Kupplungsvorrichtung, des Empfängerstutzens und/oder des Verriegelungsmechanismus wird zuverlässig verhindert.

Die Kupplungsvorrichtung kann auch als Kupplung, Wasserstoffkupplungsvorrichtung oder Wasserstoffkupplung bezeichnet werden. Die Kupplungsvorrichtung ist geeignet, in dem Empfängerstutzen eines Fahrzeugs aufgenommen zu werden, um das Fahrzeug zu betanken. Der Kupplungsvorrichtung ist ein Tankschlauch zugeordnet. Der Tankschlauch kann Teil der Kupplungsvorrichtung sein. Das Ventil ist vorzugsweise ein Auf-Zu-Ventil. Das heißt, das Ventil ist insbesondere entweder vollständig geöffnet oder vollständig geschlossen. Der Eingang und der Ausgang sind insbesondere ebenfalls Teil der Kupplungsvorrichtung.

Die sekundäre Ansteuerung kann elektrisch, pneumatisch oder mechanisch sein. Mit Hilfe der primären Ansteuerung wird das Ventil im Normalbetrieb geschlossen und geöffnet. Die sekundäre Ansteuerung ist geeignet, die primäre Ansteuerung zu überbrücken oder zu übersteuern und so das Ventil unabhängig von der primären Ansteuerung zu schließen. Dass die erste Ansteuerung von der zweiten Ansteuerung "getrennt" ist, bedeutet vorliegend, dass die erste Ansteuerung und die zweite Ansteuerung nicht identisch sind. Die erste Ansteuerung und die zweite Ansteuerung unterscheiden sich also voneinander. Die sekundäre Ansteuerung wird insbesondere nur im Notfall, insbesondere wenn die Zugkraft den vorgegebenen Wert erreicht, eingesetzt. Die sekundäre Ansteuerung kann beispielsweise mit Hilfe eines Drahts oder eines Seilzugs verwirklich werden, welcher unter Spannung gerät, bevor der Tankschlauch unter Spannung steht und eine zu hohe Zugkraft in die Kupplungsvorrichtung einbringt.

Die Kupplungsvorrichtung kann einen Signal-Transmitter umfassen. Der Signal-Transmitter kann jedoch auch dem vorgenannten Empfängerstutzen zugeordnet sein. Der Signal-Transmitter, der Schalter, die primäre Ansteuerung und/oder die sekundäre Ansteuerung können zusammen einen Nottrenn-Mechanismus der Kupplungsvorrichtung bilden. Dieser Nottrennmechanismus kann auch das Ventil umfassen. Der Signal-Transmitter ist geeignet, in Abhängigkeit von der sekundären Ansteuerung den Schalter zu öffnen oder zu schließen. Insbesondere ist der Schalter mit Hilfe des Signal-Transmitters mit der sekundären Ansteuerung gekoppelt oder wirkverbunden. Das heißt insbesondere, dass die sekundäre Ansteuerung den Schalter mit Hilfe des Signal-Transmitters öffnet, um das Ventil zu schließen, sobald die auf die Kupplungsvorrichtung wirkende Zugkraft über den vorgegebenen Wert ansteigt. Der vorgebene Wert der Zugkraft kann einstellbar oder veränderbar sein.

Gemäß einer Ausführungsform ist das Ventil in einem Ausgangszustand geschlossen, wobei sich das Ventil mit Hilfe der primären Ansteuerung öffnet.

Das Ventil ist insbesondere in einem Initialzustand oder Normalzustand geschlossen. Das heißt beispielsweise für den Fall, dass das Ventil pneumatisch angesteuert ist, dass sich das Ventil erst öffnet, sobald das Ventil mit Pneumatikdruck beaufschlagt wird. Sobald dieser Pneumatikdruck nicht mehr wirkt, schließt sich das Ventil wieder selbsttätig.

Gemäß einer weiteren Ausführungsform verbringt sich das Ventil selbsttätig in den Ausgangszustand, sobald die sekundäre Ansteuerung den Schalter öffnet.

"Selbsttätig" oder "selbstständig" heißt vorliegend insbesondere, dass keine externe Kraftzufuhr oder ein externer Antrieb erforderlich ist, um das Ventil in den Ausgangszustand zu verbringen. Dies kann beispielsweise mit Hilfe eines Federelements erreicht werden, welches das Ventil schließt und dieses somit in den Ausgangszustand verbringt. Beispielsweise wird durch das Öffnen des Schalters eine Druckluftzufuhr zu dem Ventil unterbrochen. Sobald das Ventil nicht mehr mit Druckluft beaufschlagt ist, schließt es sich selbsttätig.

Gemäß einer weiteren Ausführungsform ist das Ventil pneumatisch angesteuert.

Das Ventil kann jedoch auch hydraulisch oder sogar elektrisch angesteuert sein.

Gemäß einer weiteren Ausführungsform ist dem Ventil ein Schalter vorgeschaltet, welcher mit Hilfe eines Signal-Transmitters ansteuerbar ist.

Der Signal-Transmitter ist in Abhängigkeit von der sekundären Ansteuerung geeignet, das Ventil zu öffnen und zu schließen. Sobald der Schalter geöffnet wird, schließt sich das Ventil.

Gemäß einer weiteren Ausführungsform öffnet die sekundäre Ansteuerung den Schalter, um das Ventil zu schließen.

Die sekundäre Ansteuerung kann beispielsweise ein Seilzug sein, mit dessen Hilfe der Signal-Transmitter den Schalter öffnet. Die sekundäre Ansteuerung kann auch ein Bowdenzug sein.

Gemäß einer weiteren Ausführungsform ist der Schalter ein pneumatischer Schalter.

Der Schalter kann jedoch auch ein elektromagnetischer, ein mechanischer, ein optischer, ein hydraulischer Schalter oder ein elektrischer Schalter sein.

Gemäß einer weiteren Ausführungsform wandelt der Signal-Transmitter die sekundäre Ansteuerung in ein Signal zum Öffnen des Schalters um.

Das Signal kann ein pneumatisches Signal sein.

Gemäß einer weiteren Ausführungsform erfolgt die sekundäre Ansteuerung elektrisch, pneumatisch, hydraulisch oder mit Hilfe eines Seilzugs oder Bowdenzugs.

Die sekundäre Ansteuerung kann beliebig gewählt werden. Die sekundäre Ansteuerung kann eine Bewegung des Seilzugs oder Bowdenzugs sein. Beispielsweise gerät der Seilzug oder Bowdenzug unter Spannung, bevor der Tankschlauch selbst unter Spannung gerät. Dies kann dadurch erzielt werden, dass der Seilzug eine geringere Länge als der Tankschlauch aufweist.

Gemäß einer weiteren Ausführungsform ist die primäre Ansteuerung pneumatisch oder hydraulisch.

Auch die primäre Ansteuerung kann beliebig gewählt werden.

Ferner wird eine Kryo-Betankungsanordnung mit einer derartigen Kupplungsvorrichtung und einem Empfängerstutzen zum Empfangen der Kupplungsvorrichtung vorgeschlagen.

Die Kupplungsvorrichtung kann in den Empfängerstutzen eingesteckt werden. Ein Betankungsvorgang kann dann automatisiert durchgeführt werden. Mit Hilfe der sekundären Ansteuerung kann der Betankungsvorgang jederzeit unterbrochen und die Kupplungsvorrichtung aus dem Empfängerstutzen ausgeworfen werden. Der Empfängerstutzen ist vorzugsweise an einem Fahrzeug vorgesehen. Die Kupplungsvorrichtung hingegen ist bevorzugt an einer Tanksäule vorgesehen. Somit ist der Empfängerstutzen bevorzugt fahrzeugseitig angeordnet, wohingegen die Kupplungsvorrichtung bevorzugt tanksäulenseitig vorgesehen ist.

Gemäß einer Ausführungsform umfasst die Kryo-Betankungsanordnung ferner einen Signal-Transmitter, der die sekundäre Ansteuerung in ein Signal zum Öffnen des Schalters umwandelt.

Der Signal-Transmitter ist insbesondere zwischen der sekundären Ansteuerung und dem Schalter platziert. Somit ist die sekundäre Ansteuerung insbesondere mit Hilfe des Signal-Transmitters mit dem Schalter wirkverbunden oder gekoppelt.

Gemäß einer weiteren Ausführungsform ist der Signal-Transmitter kupplungsseitig oder empfängerseitig vorgesehen.

Das heißt insbesondere, dass der Signal-Transmitter Teil der Kupplungsvorrichtung oder Teil des Empfängerstutzens sein kann. Besonders bevorzugt ist der Signal-Transmitter jedoch Teil der Kupplungsvorrichtung.

Gemäß einer weiteren Ausführungsform wirkt der Signal-Transmitter als Kraftpuffer.

Hierunter ist insbesondere zu verstehen, dass der Signal-Transmitter den Schalter erst dann öffnet und das Ventil somit schließt, wenn der vorgebene Wert der Zugkraft erreicht ist. Wirken Zugkräfte unterhalb des vorgebenen Werts, steuert der Signal-transmitter den Schalter nicht an und das Ventil bleibt somit geöffnet.

Gemäß einer weiteren Ausführungsform ist der vorgebene Wert der Zugkraft mit Hilfe eines Austauschens von Komponenten des Signal-Transmitters einstellbar.

Die Komponenten können beispielsweise Federelemente oder dergleichen sein. Somit ist es beispielsweise möglich, den Signal-Transmitter und so die Kupplungsvorrichtung an beliebige vorgegebene Werte der Zugkraft anzupassen. Dies ermöglicht beispielsweise eine einfache Anpassung der Kryo-Betankungsanordnung beziehungsweise der Kupplungsvorrichtung an unterschiedliche Fahrzeugtypen. Der vorgebene Wert der Zugkraft ist damit abhängig von der Fahrzeugart leicht anpassbar. Dies kann durch ein leicht austauschbares Federelement oder einen direkt auf der Kupplungsvorrichtung vorgesehenen Federwagen verwirklicht werden.

Gemäß einer weiteren Ausführungsform weist der Signal-Transmitter ein Federelement und/oder Sensoren auf, um den Schalter anzusteuern, sobald die auf die Kupplungsvorrichtung wirkende Zugkraft über den vorgegebenen Wert ansteigt.

Die Sensoren können beispielsweise optische Sensoren, magnetische Senoren oder dergleichen sein. Es kann ein Lichtvorhang, eine optische Signalgebung und/oder eine Kopplung von Sensoren in oder an einem Tragarm oder in oder an dem Tankschlauch vorgesehen sein.

Gemäß einer weiteren Ausführungsform sind die Kupplungsvorrichtung und der Empfängerstutzen von einem verriegelten Zustand in einen entriegelten Zustand und umgekehrt verbringbar, wobei die sekundäre Ansteuerung den Schalter vor einem Verbringen der Kupplungsvorrichtung und des Empfängerstutzens von dem verriegelten Zustand in den entriegelten Zustand öffnet, um das Ventil zu schließen.

In dem verriegelten Zustand sind die Kupplungsvorrichtung und der Empfängerstutzen insbesondere formschlüssig verriegelt. Eine formschlüssige Verbindung entsteht durch das Ineinander- oder Hintergreifen von zwei Verbindungspartnern. Hierdurch kann vorteilhafterweise erreicht werden, dass das Ventil zuerst geschlossen wird und dann erst ein Entriegelung und ein Trennen der Kupplungsvorrichtung und des Empfängerstutzens erfolgt. Insbesondere kann mit dem Öffnen des Schalters gleichzeitig oder mit einer geringen zeitlichen Verzögerung ein Verriegelungsmechanismus zwischen der Kupplungsvorrichtung und dem Empfängerstutzen gelöst werden, so dass die Kupplungsvorrichtung aus dem Empfängerstutzen herausrutscht oder aus diesem ausgestoßen wird, bevor auf diesen übermäßige Zugkräfte übertragen werden können.

Gemäß einer weiteren Ausführungsform erfolgt das Verbringen der Kupplungsvorrichtung und des Empfängerstutzens von dem verriegelten Zustand in den entriegelten Zustand mit Hilfe der sekundären Ansteuerung.

Die sekundäre Ansteuerung kann für weitere Prozesse unabhängig von der primären Ansteuerung genutzt werden. Beispielsweise kann ein Auslösen einer Druckentlastung oder ein Inertisieren verwirklicht werden. Ferner kann die sekundäre Ansteuerung auch für ein sicheres Entriegeln und Auswerfen der Kupplungsvorrichtung aus dem Empfängerstutzen eingesetzt werden.

Die für die vorgeschlagenen Kupplungsvorrichtung beschriebenen Ausführungsformen und Merkmale gelten für die vorgeschlagene Kryo-Betankungsanordnung entsprechend und umgekehrt.

Weitere mögliche Implementierungen der Kupplungsvorrichtung und/oder der Kryo-Betankungsanordnung umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform der Kupplungsvorrichtung und/oder der Kryo-Betankungsanordnung hinzufügen.

Weitere vorteilhafte Ausgestaltungen der Kupplungsvorrichtung und/oder der Kryo-Betankungsanordnung sind Gegenstand der Unteransprüche sowie der im Folgenden beschriebenen Ausführungsbeispiele der Kupplungsvorrichtung und/oder der Kryo-Betankungsanordnung. Im Weiteren werden die Kupplungsvorrichtung und/oder die Kryo-Betankungsanordnung anhand von bevorzugten Ausführungsformen unter Bezugnahme auf die beigelegte Figur näher erläutert.

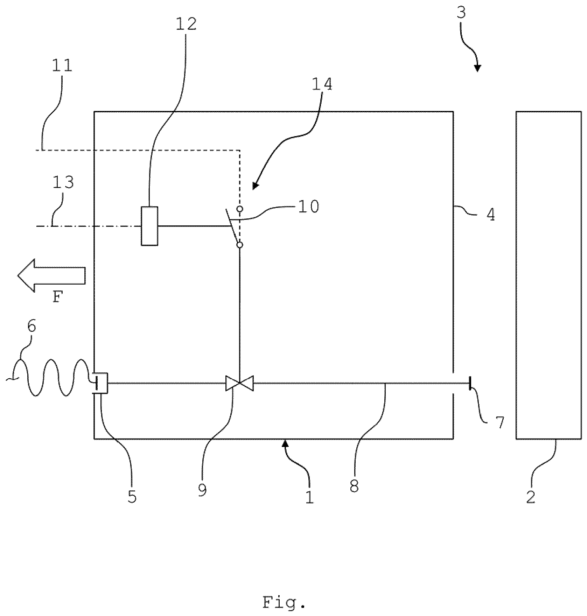

Die Figur zeigt eine schematische Ansicht einer Ausführungsform Kryo-Betankungsanordnung.

In der Figur sind gleiche oder funktionsgleiche Elemente mit denselben Bezugszeichen versehen worden, sofern nichts anderes angegeben ist.

Die Figur zeigt eine schematische Schnittansicht einer Ausführungsform einer Kupplungsvorrichtung 1. Die Kupplungsvorrichtung 1 kann in einen korrespondierenden Empfängerstutzen 2 eingreifen. Der Empfängerstutzen 2 kann an einem Fahrzeug vorgesehen sein. Beispielsweise kann der Empfängerstutzen 2 ein Tankstutzen sein. Die Kupplungsvorrichtung 1 und der Empfängerstutzen 2 zusammen bilden eine Cryo- oder Kryo-Betankungsanordnung 3.

Die Kryo-Betankungsanordnung 3 kann auch als cryogene Betankungsanordnung bezeichnet werden. Die Kryo-Betankungsanordnung 3 ist geeignet, beispielsweise einen Speicherbehälter mit einem Kryogen oder einem kryogenen Medium zu betanken. Das Kryogen kann beispielsweise flüssiger Wasserstoff, Monosilan, Äthylen oder dergleichen sein.

Die Kupplungsvorrichtung 1 umfasst ein Gehäuse 4. Beispielsweise kann ein Benutzer das Gehäuse 4 greifen, um dieses in den Empfängerstutzen 2 einzustecken. Die Kupplungsvorrichtung 1 umfasst einen Eingang 5, an dem ein Tankschlauch 6 angekuppelt sein kann. Weiterhin weist die Kupplungsvorrichtung 1 einen Ausgang 7 auf. Der Eingang 5 ist mit dem Ausgang 7 über eine Leitung 8 gekoppelt. In der Leitung 8 ist ein steuerbares Ventil 9 angeordnet. Das Ventil 9 kann ein Auf-Zu-Ventil sein. Das heißt, das Ventil 9 ist entweder vollständig geöffnet oder vollständig geschlossen. Das Ventil 9 kann ein pneumatisches Ventil sein. Insbesondere ist das Ventil 9 in einem Ausgangszustand desselben geschlossen (Engl: Normally Closed). Beispielsweise wird das Ventil 9 durch eine Beaufschlagung mit Druckluft geöffnet. Sobald die Druckluftzufuhr unterbrochen ist, schließt sich das Ventil 9 selbsttätig. Das Ventil 9 kann in Richtung des Ausgangszustands federrückgestellt oder federvorgespannt sein.

Dem Ventil 9 ist ein Schalter 10 zugeordnet. Über eine primäre Ansteuerung 11 kann das Ventil 9 bei geschlossenem Schalter 10 zum Öffnen und Schließen des Ventils 9 angesteuert werden. Die primäre Ansteuerung 11 kann eine Pneumatikleitung sein. Die primäre Ansteuerung 11 kann jedoch auch elektrisch leitendes Kabel oder eine Glasfaserleitung sein. Nachfolgend wird davon ausgegangen, dass die primäre Ansteuerung 11 eine Pneumatikleitung ist. Der Schalter 10 ist Teil der primären Ansteuerung 11. Der Schalter 10 kann von einem geschlossenen Zustand (mit gestrichelten Linien dagestellt) in einen geöffneten Zustand (mit durchgezogenen Linien dargestellt) und umgekehrt verbracht werden.

Dem Ventil 9 ist ferner ein Signal-Transmitter 12 zugeordnet. Der Signal-Transmitter 12 kann auch an dem Empfängerstutzen 2 vorgesehen sein. Eine sekundäre Ansteuerung 13 ist mit dem Signal-Transmitter 12 gekoppelt, welcher wiederum mit dem Schalter 10 wirkverbunden ist. Der Schalter 10, die primäre Ansteuerung 11, der Signal-Transmitter 12 und die sekundäre Ansteuerung 13 bilden zusammen einen Nottrenn-Mechanismus 14 der Kupplungsvorrichtung 1. Der Schalter 10 kann auch Teil der sekundären Ansteuerung 13 sein. Das heißt insbesondere, dass der Schalter 10 Teil beider Ansteuerungen 11, 13 sein kann. Der Nottrenn-Mechanismus 14 kann auch das Ventil 9 umfassen. Der Signal-Transmitter 12 ist geeignet, in Abhängigkeit von der sekundären Ansteuerung 13 den Schalter 10 zu öffnen oder zu schließen.

Der Signal-Transmitter 12 kann im einfachsten Fall ein Federelement sein. Der Signal-Transmitter 12 kann jedoch auch einen Sensor, beispielsweise einen optischen Sensor, umfassen oder ein Sensor sein. Der Signal-Transmitter 12 kann optisch, beispielsweise in Form eines Lichtvorhangs, arbeiten. Der Signal-Transmitter 12 kann Sensoren umfassen, die in oder an einem Tragarm und/oder in oder an dem Tankschlauch 6 vorgesehen sind.

In dem geschlossenen Zustand des Schalters 10 druckbeaufschlagt die primäre Ansteuerung 11 das Ventil 9, so dass das Ventil 9 geöffnet ist. Sobald der Signal-Transmitter 12 mit Hilfe der sekundären Ansteuerung 13 den Schalter 10 öffnet, wird das Ventil 9 nicht mehr mit dem Pneumatikdruck beaufschlagt und schließt sich selbsttätig. Das in der Kupplungsvorrichtung 1 integrierte Ventil 9 wird im Normalbetrieb über die primäre Ansteuerung 11 gesteuert. Im Normalbetrieb ist die Kupplungsvorrichtung 1 in Eingriff mit dem Empfängerstutzen 2 und das Ventil 9 ist geöffnet, so dass das Kryogen in den Speicherbehälter strömt. Die Kupplungsvorrichtung 1 ist mit Hilfe einer Verriegelungsmechanik (nicht gezeigt) fest mit dem Empfängerstutzen 2 verbunden.

Wenn eine Zugkraft F auf die Kupplungsvorrichtung 1 aufgebracht wird, beispielsweise dann, wenn der Tankschlauch 6 vollständig entfaltet ist und unter Spannung steht, ist es wünschenswert, dass eine zu starke Belastung der Verriegelungsmechanik, der Kupplungsvorrichtung 1 und/oder des Empfängerstutzens 2 verhindert wird. Hierdurch kann eine Beschädigung der Verriegelungsmechanik, der Kupplungsvorrichtung 1, des Empfängerstutzens 2, des Speicherbehälters und/oder eines Empfängerrohrleitungssystems verhindert werden.

Um dieses Ziel zu erreichen, sind die sekundäre Ansteuerung 13, der Signal-Transmitter 12 und der Schalter 10 vorgesehen. Unabhängig von der primären Ansteuerung 11 kann die sekundäre Ansteuerung 13 den Schalter 10 öffnen, um das Ventil 9 zu schließen. Die sekundäre Ansteuerung 13 kann beispielsweise elektrisch, pneumatisch oder mit Hilfe eines Seilzugs erfolgen. Für den Fall, dass die sekundäre Ansteuerung 13 ein Seilzug ist, kann dieser von seiner Länge so bemessen werden, dass dieser sich spannt und den Signal-Transmitter 12 aktiviert und somit den Schalter 10 öffnet, bevor der Tankschlauch 6 vollständig entfaltet ist und so die Zugkraft F auf die Kupplungsvorrichtung 1 beziehungsweise auf den Tankschlauch 6 wirkt. Die sekundäre Ansteuerung 13 kann auch mit Hilfe einer Infrarot-Lichtschranke, mit Mikrowellen oder mit RFID (Engl.: Radio-Frequency Identification) verwirklicht werden.

Der Signal-Transmitter 12 wirkt somit als Kraftpuffer. Das heißt, solange die wirkende Zugkraft F nicht über einen vorgegebenen Wert ansteigt, öffnet der Signal-Transmitter 12 den Schalter 10 nicht. Der Schalter 10 wird erst dann geöffnet und das Ventil 9 geschlossen, wenn der vorgegebene Wert der Zugkraft F erreicht oder überschritten wird.

Es ist somit mit Hilfe der sekundären Ansteuerung 13 unabhängig von der primären Ansteuerung 11 möglich, das Ventil 9 anzusteuern. Das Offen des Schalters 10 führt dazu, dass das Ventil 9 in einen sicheren Zustand, nämlich in den geschlossenen Zustand, verbracht wird. Mit dem Öffnen des Schalters 10 kann gleichzeitig oder mit einer geringen zeitlichen Verzögerung der Verriegelungsmechanismus gelöst werden, so dass die Kupplungsvorrichtung 1 aus dem Empfängerstutzen 2 herausrutscht oder aus diesem ausgestoßen wird, bevor auf diesen übermäßige Kräfte übertragen werden können.

Die sekundäre Ansteuerung 13 mit dem Signal-Transmitter 12 und dem Schalter 10 kann für weitere Prozesse unabhängig von der primären Ansteuerung 11 der Kupplungsvorrichtung 1 genutzt werden. Beispielsweise kann ein Auslösen einer Druckentlastung oder ein Inertisieren verwirklicht werden. Ferner kann die sekundäre Ansteuerung 13 auch für ein sicheres Entriegeln und Auswerfen der Kupplungsvorrichtung 1 verwendet werden.

Die Zugkraft F wird nicht in den Empfängerstutzen 2 eingebracht. Vielmehr kann die Kupplungsvorrichtung 1 ein Dämpfungssystem, dessen Kompensationskräfte justierbar sind, umfassen. Die auf den Tankschlauch 6 wirkende Zugkraft F wird in einer geführten Feder, die direkt in der Kupplungsvorrichtung 1 integriert ist, kompensiert. Ein sich je nach Zugkraft F einstellender Federweg wird mechanisch auf die sekundäre Ansteuerung 13 übertragen, die mit Hilfe des Schalters 10 bei einem maximal zulässigen Hub die Pneumatikversorgung des Ventils 9 unterbricht. Dadurch kann das Ventil 9 geschlossen und dadurch der Fluidstrom des Kryogens gestoppt werden.

Eine unbeabsichtigt auftretende Zugkraft F, welche zu einer Beschädigung der Kupplungsvorrichtung 1 und/oder des Empfängerstutzens 2 führen könnte, wird somit rein mechanisch in ein Pneumatiksignal umgewandelt. Dieses wiederum kann mit Aktionen für die Herstellung eines sicheren Anlagenzustands weiterverarbeitet werden. Zusätzlich wird die Zugkraft F ab einer einzustellenden Kraftlatenz auf die Verriegelungsmechanik derart übertragen, dass die feste Verriegelung gelöst wird und die Kupplungsvorrichtung 1 von dem Empfängerstutzen 2 abfällt. Es wird vorteilhafterweise ein Schließen des Ventils 9 ermöglicht, bevor ein Trennvorgang der Kupplungsvorrichtung 1 und des Empfängerstutzens 2 eingeleitet wird.

Obwohl die vorliegende Erfindung anhand von Ausführungsbeispielen beschrieben wurde, ist sie vielfältig modifizierbar.

### Verwendete Bezugszeichen

- 1: Kupplungsvorrichtung
- 2: Empfängerstutzen
- 3: Kryo-Betankungsanordnung
- 4: Gehäuse
- 5: Eingang
- 6: Tankschlauch
- 7: Ausgang
- 8: Leitung
- 9: Ventil
- 10: Schalter
- 11: primäre Ansteuerung
- 12: Signal-Transmitter
- 13: sekundäre Ansteuerung
- 14: Nottrenn-Mechanismus

- F: Zugkraft

## Patentansprüche

1. Kupplungsvorrichtung (1) für eine Kryo-Betankungsanordnung (3), mit einem Ventil (9), welches zwischen einem Eingang (5) und einem Ausgang (7) der Kupplungsvorrichtung (1) angeordnet ist, einer primären Ansteuerung (11) zum Öffnen und Schließen des Ventils (9), und einer von der primären Ansteuerung (11) getrennten sekundären Ansteuerung (13), wobei die primäre Ansteuerung (11) einen Schalter (10) aufweist, der dem Ventil (9) vorgeschaltet ist, und wobei die sekundäre Ansteuerung (13) den Schalter (10) öffnet, um das Ventil (9) zu schließen, sobald eine auf die Kupplungsvorrichtung (1) wirkende Zugkraft (F) über einen vorgegebenen Wert ansteigt.

2. Kupplungsvorrichtung nach Anspruch 1, wobei das Ventil (9) in einem Ausgangszustand geschlossen ist, und wobei sich das Ventil (9) mit Hilfe der primären Ansteuerung (11) öffnet.

3. Kupplungsvorrichtung nach Anspruch 2, wobei sich das Ventil (9) selbsttätig in den Ausgangszustand verbringt, sobald die sekundäre Ansteuerung (13) den Schalter (10) öffnet.

4. Kupplungsvorrichtung nach einem der Ansprüche 1 - 3, wobei das Ventil (9) pneumatisch angesteuert ist.

5. Kupplungsvorrichtung nach einem der Ansprüche 1 - 4, wobei der Schalter (10) ein pneumatischer Schalter ist.

6. Kupplungsvorrichtung nach einem der Ansprüche 1 - 5, wobei die sekundäre Ansteuerung (13) elektrisch, pneumatisch, hydraulisch oder mit Hilfe eines Seilzugs erfolgt.

7. Kupplungsvorrichtung nach einem der Ansprüche 1 - 6, wobei die primäre Ansteuerung (11) pneumatisch oder hydraulisch ist.

8. Kryo-Betankungsanordnung (3) mit einer Kupplungsvorrichtung (1) nach einem der Ansprüche 1 - 7 und einem Empfängerstutzen (2) zum Empfangen der Kupplungsvorrichtung (1).

9. Kryo-Betankungsanordnung nach Anspruch 8, ferner umfassend einen Signal-Transmitter (12), der die sekundäre Ansteuerung (13) in ein Signal zum Öffnen des Schalters (10) umwandelt.

10. Kryo-Betankungsanordnung nach Anspruch 9, wobei der Signal-Transmitter (12) kupplungsseitig oder empfängerseitig vorgesehen ist.

11. Kryo-Betankungsanordnung nach Anspruch 9 oder 10, wobei der Signal-Transmitter (12) als Kraftpuffer wirkt.

12. Kryo-Betankungsanordnung nach einem der Ansprüche 9 - 11, wobei der vorgebene Wert der Zugkraft (F) mit Hilfe eines Austauschens von Komponenten des Signal-Transmitters (12) einstellbar ist.

13. Kryo-Betankungsanordnung nach einem der Ansprüche 9 - 12, wobei der Signal-Transmitter (12) ein Federelement und/oder Sensoren aufweist, um den Schalter (10) anzusteuern, sobald die auf die Kupplungsvorrichtung (1) wirkende Zugkraft (F) über den vorgegebenen Wert ansteigt.

14. Kryo-Betankungsanordnung nach einem der Ansprüche 8 - 13, wobei die Kupplungsvorrichtung (1) und der Empfängerstutzen (2) von einem verriegelten Zustand in einen entriegelten Zustand und umgekehrt verbringbar sind, und wobei die sekundäre Ansteuerung (13) den Schalter (10) vor einem Verbringen der Kupplungsvorrichtung (1) und des Empfängerstutzens (2) von dem verriegelten Zustand in den entriegelten Zustand öffnet, um das Ventil (9) zu schließen.

15. Kryo-Betankungsanordnung nach Anspruch 14, wobei das Verbringen der Kupplungsvorrichtung (1) und des Empfängerstutzens (2) von dem verriegelten Zustand in den entriegelten Zustand mit Hilfe der sekundären Ansteuerung (13) erfolgt.

## Claims

1. A coupling device (1) for a cryogenic refueling arrangement (3), having a valve (9) which is arranged between an inlet (5) and an outlet (7) of the coupling device (1), a primary actuation mechanism (11) for opening and closing the valve (9), and a secondary actuation mechanism (13) separate from the primary actuation mechanism (11), wherein the primary actuation mechanism (11) has a switch (10) upstream of the valve (9), and wherein the secondary actuation mechanism (13) opens the switch (10) in order to close the valve (9) as soon as a pulling force (F) acting on the coupling device (1) exceeds a predetermined value.

2. The coupling device according to claim 1, wherein the valve (9) is closed in an initial state, and wherein the valve (9) opens with the aid of the primary actuation mechanism (11).

3. The coupling device according to claim 2, wherein the valve (9) automatically moves into the initial state as soon as the secondary actuation mechanism (13) opens the switch (10).

4. The coupling device according to claim 1, wherein the valve (9) is pneumatically controlled.

5. The coupling device according to claim 1, wherein the switch (10) is a pneumatic switch (10).

6. The coupling device according to claim 1, wherein the secondary actuation mechanism (13) is implemented electrically, pneumatically, hydraulically, or with the aid of a cable pull.

7. The coupling device according to claim 1, wherein the primary actuation mechanism (11) is pneumatic or hydraulic.

8. A cryogenic refueling arrangement (3) having a coupling device (1) according to claim 1 and a receiver nozzle (2) for receiving the coupling device (1).

9. The cryogenic refueling arrangement according to claim 8, further comprising a signal transmitter (12) that converts the secondary actuation mechanism (13) into a signal for opening the switch (10).

10. The cryogenic refueling arrangement according to claim 9, wherein the signal transmitter (12) is provided on the coupling side or on the receiver side.

11. The cryogenic refueling arrangement according to claim 9, wherein the signal transmitter (12) acts as a force buffer.

12. The cryogenic refueling arrangement according to claim 9, wherein the predetermined value of the pulling force (F) is adjustable with the aid of an exchanging of components of the signal transmitter (12).

13. The cryogenic refueling arrangement according to claim 9, wherein the signal transmitter (12) has a spring element and/or sensors to control the switch (10) as soon as the pulling force (F) acting on the coupling device (1) exceeds the predetermined value.

14. The cryogenic refueling arrangement according to claim 8, wherein the coupling device (1) and the receiver nozzle (2) can be moved from a locked state to an unlocked state and vice versa, and wherein the secondary actuation mechanism (13) opens the switch (10) before a moving of the coupling device (1) and the receiver nozzle (2) from the locked state to the unlocked state in order to close the valve (9).

15. The cryogenic refueling arrangement according to claim 14, wherein the moving of the coupling device (1) and the receiver nozzle (2) from the locked state to the unlocked state takes place with the aid of the secondary actuation mechanism (13).

## Revendications

1. Dispositif d'accouplement (1) pour un ensemble de ravitaillement cryogénique (3), comprenant une vanne (9) disposée entre une entrée (5) et une sortie (7) du dispositif d'accouplement (1), une commande primaire (11) pour ouvrir et fermer la vanne (9), et une commande secondaire (13) séparée de la commande primaire (11),
dans lequel la commande primaire (11) comporte un commutateur (10) qui est monté en amont de la vanne (9), et
la commande secondaire (13) ouvre le commutateur (10) pour fermer la vanne (9) dès qu'une force de traction (F) agissant sur le dispositif d'accouplement (1) augmente au-delà d'une valeur prédéterminée.

2. Dispositif d'accouplement selon la revendication 1,
dans lequel la vanne (9) est fermée dans un état initial, et
la vanne (9) s'ouvre à l'aide de la commande primaire (11).

3. Dispositif d'accouplement selon la revendication 2,
dans lequel la vanne (9) se déplace automatiquement vers l'état initial dès que la commande secondaire (13) ouvre le commutateur.

4. Dispositif d'accouplement selon l'une des revendications 1 à 3,
dans lequel la vanne (9) est commandée pneumatiquement.

5. Dispositif d'accouplement selon l'une des revendications 1 à 4,
dans lequel le commutateur (10) est un commutateur pneumatique.

6. Dispositif d'accouplement selon l'une des revendications 1 à 5,
dans lequel la commande secondaire (13) est électrique, pneumatique, hydraulique ou est réalisée à l'aide d'un tirant à câble.

7. Dispositif d'accouplement selon l'une des revendications 1 à 6,
dans lequel la commande primaire (11) est pneumatique ou hydraulique.

8. Ensemble de ravitaillement cryogénique (3) comprenant un dispositif d'accouplement (1) selon l'une des revendications 1 à 7 et une tubulure réceptrice (2) pour recevoir le dispositif d'accouplement (1).

9. Ensemble de ravitaillement cryogénique selon la revendication 8,
comprenant en outre un transmetteur de signaux (12) qui convertit la commande secondaire (13) en un signal d'ouverture du commutateur (10).

10. Dispositif de ravitaillement cryogénique selon la revendication 9,
dans lequel le transmetteur de signaux (12) est prévu du côté de l'accouplement ou du côté du récepteur.

11. Dispositif de ravitaillement cryogénique selon la revendication 9 ou 10,
dans lequel le transmetteur de signaux (12) agit comme un tampon de force.

12. Dispositif de ravitaillement cryogénique selon l'une des revendications 9 à 11,
dans lequel la valeur prédéterminée de la force de traction (F) est réglable à l'aide d'un échange de composants du transmetteur de signaux (12).

13. Dispositif de ravitaillement cryogénique selon l'une des revendications 9 à 12,
dans lequel le transmetteur de signaux (12) comporte un élément élastique et/ou des capteurs pour commander le commutateur (10) dès que la force de traction (F) agissant sur le dispositif d'accouplement (1) augmente au-delà de la valeur prédéterminée.

14. Ensemble de ravitaillement cryogénique selon l'une des revendications 8 à 13,
dans lequel le dispositif d'accouplement (1) et la tubulure réceptrice (2) peuvent être déplacés d'un état verrouillé à un état déverrouillé et inversement, et
la commande secondaire (13) ouvre le commutateur (10) avant un déplacement du dispositif d'accouplement (1) et de la tubulure réceptrice (2) de l'état verrouillé à l'état déverrouillé, afin de fermer la vanne (9).

15. Dispositif de ravitaillement cryogénique selon la revendication 14,
dans lequel le déplacement du dispositif d'accouplement (1) et de la tubulure réceptrice (2) de l'état verrouillé à l'état déverrouillé est effectué à l'aide de la commande secondaire (13).
